# EUROPÄISCHE PATENTSCHRIFT

(11) **EP 2 501 969 B1**
(45) Veröffentlichungstag und Bekanntmachung des Hinweises auf die Patenterteilung: **11.01.2017**
(21) Anmeldenummer: 10782193.6
(22) Anmeldetag: 15.11.2010
(51) Int. Cl.: F16K 31/40

(54) **KONDENSATVENTIL**
CONDENSATE VALVE
VANNE POUR CONDENSAT

(30) Priorität: 20.11.2009 DE 102009054064
(43) Veröffentlichungstag der Anmeldung: 26.09.2012
(73) Patentinhaber: Bauer Kompressoren GmbH, 81477 München (DE)
(72) Erfinder: BAUER, Heinz, 81479 München (DE); WINNERL, Josef, 82152 Planegg (DE)
(74) Vertreter: Hering, Hartmut
(86) Internationale Anmeldenummer: PCT/EP2010/006942
(87) Internationale Veröffentlichungsnummer: WO 2011/060909

(56) Entgegenhaltungen:
- EP-A2- 1 593 422
- DE-A1- 1 403 847
- DE-A1- 3 502 518
- DE-A1-102005 055 360
- DE-U1- 20 307 238

## Beschreibung

Die Erfindung befasst sich mit einem Kondensatablasssystem nach dem Oberbegriff des Anspruches 1.

Ein Ablasssystem der im Oberbegriff des Anspruches 1 umrissenen Art ist aus DE-U203 07 238 bekannt.

Hoch- und Mitteldruckkompressoren umfassen Öl-/Wasserabscheider zur Abtrennung von Öl und Wasser aus der komprimierten Druckluft vor der Abgabe von Druckluft an den Verbraucher. Insbesondere ist ein solches Kondensatablasssystem als Kondensatablassautomatik ausgebildet, mittels welcher sämtliche Öl-/Wasserabscheider an Hoch- und Mitteldruckkompressoren automatisch entwässert werden können.

Bei einigen bisher bekannten Kondensatablasssystemen erfolgt die Steuerung derselben mittels zusätzlicher Steuerluft, und der Systemdruck der Kompressoranlage wird im Zuge des Ablassens des Kondensats nicht reduziert. Beim Ablassen des Kondensats stellt sich somit ein großes Ablassvolumen ein, welches nicht direkt in einen Kondensatauffangbehälter abgeleitet werden kann, da zuvor noch in einem zusätzlichen Behälter das abgelassene Kondensat entspannt werden muss. Bedingt durch das große Ablassvolumen fällt der Systemdruck der Kompressoranlage ab, worunter der Wirkungsgrad der Kompressoranlage leidet. Bei einer Ansteuerung des Kondensatablasssystems über zusätzliche Steuerluft sind ferner noch zusätzliche Leitungen vorzusehen, so dass insgesamt gesehen ein beträchtlicher Aufwand für die Realisierung eines solchen Kondensatablasssystems erforderlich ist.

Bei anderen Anwendungsfällen sind die Kondensatventile nicht direkt an dem Öl-/Wasserabscheidern der Kompressoranlage angebracht, sondern sie sind gesondert hierzu angeordnet, wozu gegebenenfalls noch zusätzliche Verbindungsleitungen zwischen den Öl-/Wasserabscheidern und den Kondensatventilen vorgesehen sein müssen. Hierdurch wird natürlich die Konstruktion auch aufwändiger.

Auch gibt es Kondensatablasssysteme, bei denen das Kondensat direkt über vorgesteuerte Magnetventile mit sehr kleinem Nenndurchmesser ausgeleitet wird. Die Magnetventile mit kleinem Nenndurchmesser sind sehr empfindlich gegen Verschmutzungen und zudem sind diese Mittel- bzw. Hochdruckmagnetventile für die direkte Ableitung des Kondensats schließlich in ihren Gestehungskosten teuer. Wenn man zur Vermeidung der Verschmutzungsneigung anstelle der Magnetventile mit kleinem Nenndurchmesser solche mit größerem Nenndurchmesser wählt, so erhält man ein so großes Ablassvolumen, dass zur Entspannung und Dämpfung zusätzliche Entlastungsbehälter als Zwischenbehälter für das Kondensat erforderlich werden.

Auch gibt es ein Kondensatventil mit integriertem Magnetventil, welches direkt an einem Öl-/Wasserabscheider angebracht werden kann. Ein derartiges Kondensatventil hat aber einen äußerst komplizierten Aufbau, ist mit hohen Kosten verbunden und ist störungsanfällig, da teilweise im Kondensatventil sehr kleine Leitungsquerschnitte vorhanden sind, die leicht zum Verstopfen neigen.

Unter Überwindung der zuvor geschilderten Schwierigkeiten liegt daher der vorliegenden Erfindung die Aufgabe zugrunde, ein Kondensatablasssystem der vorstehend genannten Art bereitzustellen, bei welchem auf bauteilarme Weise ein störungsunempfindliches Ableiten von Kondensat ohne eine nennenswerte Beeinträchtigung des Wirkungsgrads der Kompressoranlage auf möglichst kostengünstige Weise erreicht wird.

Nach der Erfindung wird hierzu ein Kondensatablasssystem bereitgestellt, dessen Merkmale im Anspruch 1 angegeben sind.

Bei dem erfindungsgemäßen Kondensatablasssystem erfolgt ein gezieltes Ableiten des Kondensats des Öl-/Wasserabscheiders an Hoch- und Mitteldruckkompressoren durch ein Absperrorgan, wie beispielsweise ein Magnetventil, welches dazu dient, eine im Kondensatablasssystem angeordnetes Kondensatventil zu öffnen und zu schließen, um entsprechende Kondensatablassvorgänge zu realisieren. Da das vom Kondensat durchströmte Kondensatventil derart ausgestaltet ist, dass es zugleich einen Druckminderer zum Herabsetzen des Drucks des abströmenden Kondensats bildet, lässt sich der Druck an der Ausgangsseite des Kondensatventils gegenüber jenem an der Eintrittsseite und dem Systemdruck beträchtlich reduzieren. Hierdurch wird es ermöglicht, dass man das Kondensat an der Ausgangsseite des Kondensatventils unmittelbar und ohne Zwischenbehälter in einen zugeordneten Kondensatauffangbehälter ableiten kann. Bei dem Kondensatventil erfolgt die Entspannung beim Durchgang durch das Kondensatventil, so dass man keinen zusätzlichen Entspannungsbehälter benötigt, wodurch sich die Gesamtkonstruktion wesentlich vereinfacht und kostengünstiger darstellen lässt. Da beim Kondensatventil der Druck im Kondensatventil beträchtlich herabgesetzt wird, können dem Kondensatventil kostengünstige Niederdruck-Komponenten nachgeschaltet werden und ermöglichen eine weitere Kostenreduzierung.

Durch die ausgangsseitige Querschnittsverengung, vorzugsweise in Form einer Düse, wird stets ein kleines Ablassvolumen definiert. Durch diese zusätzliche Maßnahme kann sichergestellt werden, dass das Kondensat vom Auslass des Kondensatventils direkt in einen Kondensatauffangbehälter oder einen Kondensatbehälter abgeleitet werden kann, ohne dass man Entspannungsbehälter bzw. Schalldämpfer benötigt.

Das Kondensatventil umfasst einen beweglichen Kolben, der eingangsseitig gegen eine durchmesserkleine Öffnung eines Ventilsitzes bei mittels des Magnetventils geschlossenem Kondensatventil drückbar ist, wobei der bewegliche Kolben als Stufenkolben ausgebildet ist, der in Durchströmrichtung des Kondensats gesehen eingangsseitig eine Kolbenfläche und ausgangsseitig eine größere Kolbenfläche besitzt, die bei mittels des Magnetventils geöffnetem Kondensatventil über eine Überströmleitung durch das Kondensat beaufschlagt ist. Dank des beweglichen Kolbens des Kondensatventils, welcher eingangsseitig einen kleinen Querschnitt besitzt und ausgangsseitig eine größere Kolbenfläche besitzt, wird mit der Ableitung des Kondensats durch das Kondensatventil der Druck des Kondensats ohne nennenswerte Beeinflussung des Systemsdrucks der Kompressoranlage beträchtlich herabgesetzt, und diese größere Kolbenfläche wird durch das Kondensat über eine Überströmleitung beaufschlagt. Diese Überströmleitung gestattet bei geöffnetem Kondensatventil ein gezieltes Ableiten des Kondensats von dem Öl-/Wasserabscheider oder den Öl-/Wasserabscheidern einer Kompressoranlage. Durch die Druckherabsetzung im Kondensatventil beim erfindungsgemäßen Kondensatablasssystem erhält man anlagetechnisch eine vereinfachte Ausgestaltungsform, da man weder zusätzliche, zwischengeschaltete Entlastungs- bzw. Entspannungsbehälter noch Schalldämpfereinrichtungen benötigt. Für die dem Kondensatventil nachgeschalteten Einrichtungen können kostengünstige Niederdruck-Komponenten eingesetzt werden.

Gemäß einer bevorzugten Ausführungsform kann die Überströmleitung als wenigstens ein sich axial durch den Kolben erstreckender Durchgangskanal ausgebildet sein, welcher vorzugsweise mittig angeordnet ist. Dadurch vereinfacht sich die Konstruktion des Kondensatventils, da die Überströmleitung in das Kondensatventil und insbesondere in dem Kolben selbst integriert ist. Hierdurch lassen sich zusätzliche mit zusätzlichem Montageaufwand verbundene Verbindungsleitungen vermeiden.

Vorzugsweise ist das Kondensatventil direkt, d.h. ohne Zwischenverbindungsleitungen, mit dem wenigsten einen Öl-/Wasserabscheider verbunden. Hierdurch lässt sich das Kondensatventil platzsparend an einem Kompressor montieren. Es vereinfachen sich auch die Montagearbeiten insgesamt.

Gemäß einer bevorzugten Ausführungsform umfasst das Kondensatventil zwei Gehäuseteile, ein oberes Gehäuseteil und ein unteres Gehäuseteil. Zweckmäßigerweise ist der Kolben im oberen Gehäuseteil beweglich aufgenommen, welches strömungseingangsseitig den die durchmesserkleine Öffnung bildenden Ventilsitz aufweist. Hermetisch dicht schließend kann dann mit dem oberen Gehäuseteil koaxial ein Gehäuseunterteil verbunden sein, in welchem die Querschnittsverengung, vorzugsweise die Düse, in einem zum Ausgang des Kondensatventils führenden Kanal ausgebildet ist.

Zusammenfassend ist es bei dem erfindungsgemäßen Kondensatablasssystem wesentlich, dass es ohne zusätzliche Entspannungs- und Schalldämpfereinrichtung auskommt. Hierzu ist es bei der erfindungsgemäßen Lösung wesentlich, dass das vom Kondensat durchströmbare Kondensatventil zugleich als Druckminderer ausgebildet ist, wozu das Kondensatventil einen beweglichen Kolben in Form eines Stufenkolbens umfasst, welcher unterschiedlich groß bemessene Kolbenflächen in zugeordneten Kammern hat, um eine beträchtliche Druckherabsetzung bei dem Durchgang durch das Kondensatventil zu realisieren. Das Kondensatventil ist ferner derart ausgelegt, dass eine unmittelbare Ableitung des Kondensats am Auslass in einen Kondensatauffangbehälter ohne zwischengeschaltete Entspannungseinrichtung gestattet.

Die Erfindung wird nachstehend unter Bezugnahme auf die beigefügte Zeichnung anhand von bevorzugten Ausführungsformen ohne jeglichen beschränkenden Charakter näher erläutert. In der Zeichnung zeigt:
- Fig. 1: eine schematische Ansicht eines Kondensatablasssystems nach der Erfindung, und
- Figuren 2A und 2B: schematische Schnittansichten durch Ausführungsformen eines Kondensatventils zur Verdeutlichung von dessen Auslegungseinzelheiten.

In den Figuren der Zeichnungen sind gleiche oder ähnliche Teile mit denselben Bezugszeichen versehen.

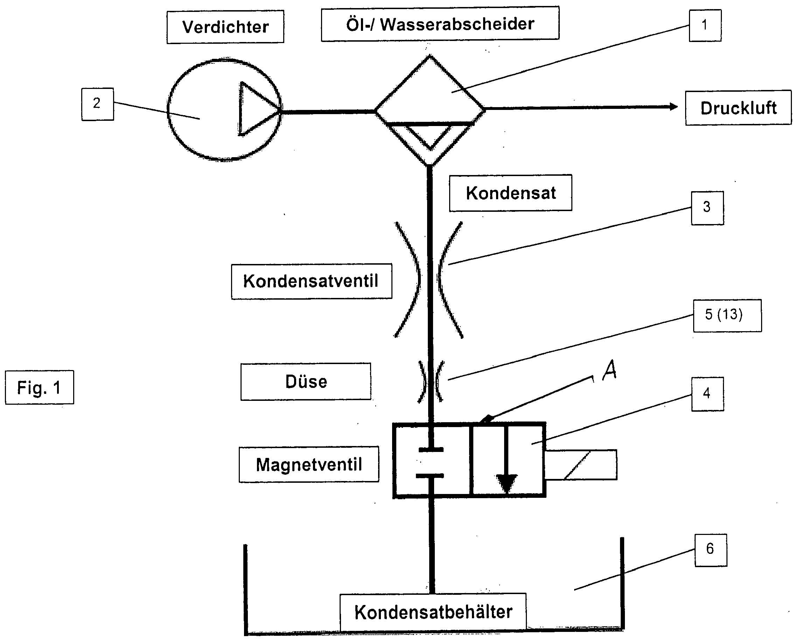

Das in Fig. 1 schematisch dargestellte Kondensatablasssystem umfasst einen Öl-/Wasserabscheider 1, welcher mit einem Kompressor 2 oder mit einer entsprechenden Stufe eines Kompressors 2 in kommunizierender Verbindung steht. Derartige Öl-/Wasserabscheider 1 sind an sich bekannt. Ausgangsseitig ist der Öl-/Wasserabscheider 1 mit einem insgesamt mit 3 bezeichneten Kondensatventil verbunden, durch welches das Kondensat des Öl-/Wasserabscheiders 1 strömt. Das Kondensatventil 3 wird zum Öffnen und Schließen durch ein Absperrorgan A, wie beispielsweise ein Magnetventil 4 angesteuert, bei dem es sich beim dargestellten Beispiel um ein 2/2-Wege-Magnetventil handelt. Dieses Magnetventil 4 wird elektrisch angesteuert. Im Kondensatventil 3 ist eine Querschnittsverengung in Form einer Düse 5 (13) nachgeschaltet, welche ein kleines Ablassvolumen definiert, welches dann ausgangsseitig vom Absperrorgan A direkt in einen Kondensatbehälter bzw. Kondensatauffangbehälter 6 abgeleitet wird. Dieses Kondensatablasssystem arbeitet derart, dass der Kondensatablass so erfolgt, dass kein Entlastungsbehälter bzw. Schalldämpfer erforderlich ist.

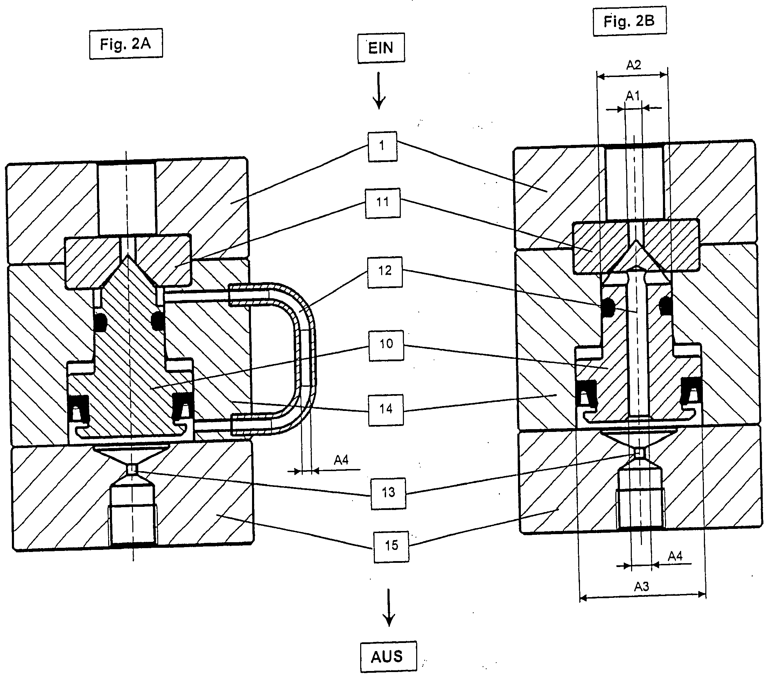

Anhand der Figuren 2A und 2B wird eine bevorzugte Ausführungsform eines in Fig. 1 schematisch mit 3 bezeichneten Kondensatventils erläutert. Wie bereits vorher beschrieben ist, ist das Kondensatventil 3 eingangsseitig wenigstens mit einem Öl-/Wasserabscheider 1 verbindbar und über ein Absperrorgan A, wie beispielsweise ein Magnetventil 4 zur Ableitung von Kondensat offen- und schließbar. Ausgangsseitig ist das Kondensatventil 3 mit einem in Fig. 1 verdeutlichten Kondensatauffangbehälter 6 verbindbar.

Insbesondere umfasst das Kondensatventil 3 einen beweglichen Kolben 10, der eingangsseitig gegen eine durchmesserkleine Öffnung mit einem Querschnitt A1 nach Fig. 2B bei mittels des Absperrorgans A bzw. des Magnetventils 4 geschlossenem Kondensatventil 3 drückbar ist, wobei diese durchmesserkleine Öffnung in einem Ventilsitz 11 vorgesehen ist, der insbesondere dichtschließend im Innenraum des Kondensatventils 3 vorgesehen ist. Wie insbesondere aus Fig. 2B zu ersehen ist, handelt es sich bei dem beweglichen Kolben 10 um einen so genannten Stufenkolben, welcher in Durchströmungsrichtung des Kondensats gesehen eingangsseitig eine Kolbenfläche A2 und ausgangsseitig eine größere Kolbenfläche A3 hat. Die Kolbenfläche A3 ist wesentlich größer als die Kolbenfläche A2 und daher wird im Kondensatventil 3 mit Hilfe dieses Stufenkolbens 10 ein Druckminderer gebildet, welcher entsprechend den Flächenverhältnissen A1, A2 und A3 eine beträchtliche Herabsetzung des Ausgangsdrucks gegenüber dem Eingangsdruck des Kondensatventils 3 bewirkt.

Bei der dargestellten bevorzugten Ausführungsform des Kondensatventils 3 enthält der bewegliche Kolben 10 als Überströmleitung einen Durchgangskanal 12, durch welchen bei geöffnetem Kondensatventil 3 ein Kondensat zu der größeren Kolbenfläche A3 strömt und diese beaufschlagt. In Fig. 2A ist die Überströmleitung als eine externe Verbindungsleitung 12 im Bereich des Kolbens 10 beispielsweise ausgebildet. Wie ferner aus Fig. 2A und 2B zu ersehen ist, ist im Auslassbereich des Kondensatventils 3 eine Querschnittsverengung vorgesehen, welche dort insbesondere in Form einer Düse 13 (5) ausgebildet ist. Mit Hilfe dieser Querschnittsverengung bzw. Düse 13 lässt sich ein kleines Ablassvolumen des Kondensatventils 3 definieren, so dass eine direkte Ableitung in den Kondensatbehälter 6 ohne zwischengeschaltete Einrichtungen, wie Entlastungsbehälter, Schalldämpfer oder dergleichen erfolgen und verwirklicht werden kann.

Wie ferner aus den Figuren 2A und 2B zu sehen ist, ist das Kondensatventil 3 vorzugsweise mehrteilig ausgelegt. Es umfasst ein oberes Gehäuse 14, in welchem der Kolben 10 bzw. der Stufenkolben 10 beweglich aufgenommen ist, und welches strömungseingangsseitig den die durchmesserkleine Öffnung A1 bildenden Ventilsitz 11 aufweist. Dicht schließend mit dem oberen Gehäuse 14 ist koaxial ein Gehäuseunterteil 15 verbunden, in welchem Querschnittsverengungen, wie die Düse 13 (5) in einem zum Ausgang des Kondensatventils 3 führenden Kanal ausgebildet ist.

Bei der Ausführungsvariante nach Fig. 2A ist nur die Querschnittsfläche A4 in Entsprechung zu Fig. 2B eingetragen.

Unter Bezugnahme auf die voranstehenden beschriebenen Einzelheiten des Kondensatventils 3 ist zusammengefasst eine solche Auslegung angegeben, dass am Ausgang jedes Öl-/Wasserabscheiders 1 ein Kondensatventil 3 im wesentlichen unmittelbar ohne zwischengeschaltete Einrichtungen angeschlossen und eingebaut ist. Das Kondensatventil 3 wird über ein Absperrorgan A, vorzugsweise ein 2/2-Wege-Magnetventil 4 pneumatisch angesteuert. Die Ausgänge des Absperrorgans A bzw. des Magnetventils 4 münden in den Kondensatbehälter bzw. Kondensatauffangbehälter 6.

Wie insbesondere aus den Figuren 2 zu sehen ist, ist im oberen Gehäuseteil 14 des Kondensatventils 3 ein, in Längsrichtung beweglicher und zum oberen Gehäuseteil 14 abgedichteter Kolben 10 angeordnet, welcher in Form eines Stufenkolbens ausgelegt ist. An der Unterseite wird das obere Gehäuseteil 14 durch ein Gehäuseunterteil 15 geschlossen und mit entsprechenden Dichtelementen abgedichtet.

Im Betrieb ist das Kondensatventil 3 geschlossen, indem der obere Konus des Kolbens 10 in die durchmesserkleine Öffnung (A1) in dem Ventilsitz 11 gedrückt wird. Das Abdichten des Ventilsitzes 11 gegenüber dem Öl-/Wasserabscheider 1 und gegenüber dem oberen Gehäuseteil 14 erfolgt mit Hilfe von jeweils schematisch dargestellten, aber nicht näher bezeichneten Dichtelementen.

Nachstehend soll die Funktionsweise noch kurz erörtert werden. Das Kondensatventil 3 wirkt als Druckminderer und das Druckminderererverhältnis ergibt sich aus dem Verhältnis zwischen dem Eingangsdruck p und dem Ausgangsdruck, welcher durch die entsprechenden Verhältnisse von durchmesserkleiner Öffnung am Ventilsitz 11 und den Kolbenflächen A2 und A3 gebildet wird. Durch die Querschnittsverengung in Form der Düse 13 (5) in dem Kanal auf der Auslassseite des Kondensatventils 3 lässt sich ein kleines Ablassvolumen definieren, welches dann eine direkte Ableitung vom Absperrorgan A bzw. Magnetventil 4 in den Kondensatbehälter 6 gestattet. Hierbei erfolgt der Kondensatablass so sanft, dass kein Entlastungsbehälter bzw. Schalldämpfer erforderlich ist. Infolge des herabgesetzten Drucks können dem Kondensatventil 3 Komponenten und Baugruppen nachgeschaltet werden, bei denen es sich um preisgünstige Niederdruck-Komponenten handeln kann.

Das Kondensatablasssystem arbeitet derart, dass beim Einschalten des Kompressors 2 die Absperrorgane A bzw. die Magnetventile 4 geschlossen werden und in der Anlage steigt der Druck an. Durch die Gestaltung des Stufenkolbens 10 erzeugt der ansteigende Druck eine in Richtung des Ventilsitzes 11 gerichtete Druckkraft auf den Kolben 10 und dieser wird gegen den Ventilsitz 11 gedrückt. Das Kondensatventil 3 ist geschlossen und der Kompressor 2 baut seinen Betriebsdruck auf und kann Druckluft fördern.

Zum Kondensatablass wird das Absperrorgan A bzw. das Magnetventil 4 für kurze Zeit geöffnet, wodurch es zu einem Druckabfall im Raum unterhalb des Kolbens 10 kommt, so dass das Kondensatventil 3 durch eine abwärts gerichtete Bewegung des Kolbens 10 geöffnet wird. Somit kann das Kondensat durch die als Überlaufleitungen dienenden Durchflusskanäle 12 im Kolben 10 oder auch extern (siehe Fig. 2A) aus dem Öl-/Wasserabscheider 1 abströmen und es beaufschlagt die größere Kolbenfläche A3 des Kolbens 10. Das Kondensat kann dann unter Durchgang durch die Düse 13 (5) direkt in den Kondensatbehälter 6 gelangen. Wird das Absperrorgan A bzw. das Magnetventil 4 wieder geschlossen, so kann der Druck unterhalb des Kolbens 10 wieder ansteigen und das Kondensatventil 3 wird, wie eingangs bereits beschrieben, geschlossen. Wenn die Kompressoranlage abgeschaltet wird, wird das oder es werden alle Absperrorgane A bzw. Magnetventile 4 geöffnet, so dass auch das oder die Kondensatventile 3 geöffnet werden. Auf diese Weise wird die gesamte Kompressoranlage entlüftet.

## Patentansprüche

1. Kondensatablasssystem, umfassend wenigstens einen Öl-/Wasserabscheider (1), welcher mit einem Kompressor (2) oder einer Kompressorstufe kommunizierend verbunden ist, ein Kondensatventil (3), das eingangsseitig mit dem wenigstens einen Öl-/Wasserabscheider (1) verbunden ist und über ein in Reihe geschaltetes Absperrorgan (A) zur Kondensatableitung öffen- und schließbar ist, und einen Kondensatauffangbehälter (6), welcher mit dem Ausgang des Kondensatventils (3) in Verbindung steht, **dadurch gekennzeichnet, dass** das Kondensatventil (3) zugleich als Druckminderer zum Herabsetzen des Drucks des abströmenden Kondensats ausgebildet ist und ausgangsseitig eine Querschnittsverengung, vorzugsweise eine Düse (13) zur Steuerung und Bestimmung einer kleinen Ablaufmenge hat, die direkt in den Kondensatauffangbehälter (6) gelangt, dass das Kondensatventil (3) einen beweglichen Kolben (10) umfasst, der eingangsseitig gegen eine durchmesserkleine Öffnung (A1) eines Ventilsitzes (11) bei mittels des Absperrorgans (A) geschlossenem Kondensatventil (3) drückbar ist und dass der Kolben (10) als Stufenkolben ausgebildet ist, der in Durchströmrichtung des Kondensats gesehen eingangsseitig eine Kolbenfläche (A2) und ausgangsseitig eine größere Kolbenfläche (A3) besitzt, die bei mittels des Absperrorgans (A) geöffnetem Kondensatventil (3) über eine Überströmleitung (12) durch das Kondensat beaufschlagt ist.

2. Kondensatablasssystem nach Anspruch 1, **dadurch gekennzeichnet, dass** die Überströmleitung wenigstens als ein sich axial durch den Kolben (10), vorzugsweise mittig, erstreckender Durchgangskanal (12) ausgebildet ist.

3. Kondensatablasssystem nach einem der Ansprüche 1 oder 2, **dadurch gekennzeichnet, dass** das Kondensatventil (3) direkt mit dem wenigstens einen Öl-/Wasserabscheider (1) verbunden ist.

4. Kondensatablasssystem nach einem der Ansprüche 1 bis 3, **dadurch gekennzeichnet, dass** der Kolben (10) in einem oberen Gehäuseteil (14) beweglich aufgenommen ist, welches strömungseingangsseitig den die durchmesserkleine Öffnung bildenden Ventilsitz (11) aufweist.

5. Kondensatablasssystem nach Anspruch 4, **dadurch gekennzeichnet, dass** mit dem oberen Gehäuseteil (14) hermetisch dicht schließend koaxial ein Gehäuseunterteil (15) verbunden ist, in welchem die Querschnittsverengung, vorzugsweise die Düse (13), in einem zum Ausgang des Kondensatventils führenden Kanal ausgebildet ist.

6. Kondensatablasssystem nach einem der vorangehenden Ansprüche, **dadurch gekennzeichnet, dass** das Absperrorgan (A) von einem Magnetventil (4) gebildet wird.

## Claims

1. Condensate drainage system, comprising at least one oil-water separator (1), which is connected to communicate with a compressor (2) or a compressor stage, a condensate valve (3), which is connected on the input side to the at least one oil-water separator (1) and can be opened and closed by means of a shut-off device (A) connected in series for discharging condensate, and a condensate collection container (6), which is connected to the outlet of the condensate valve (3), **characterised in that** the condensate valve (3) is configured to act at the same time as pressure reducer for decreasing the pressure of the outflowing condensate and has a constriction of its cross section on the outlet side, preferably a nozzle (13) for controlling and determining a small discharge quantity, which passes directly into the condensate collection container (6), that the condensate valve (3) comprises a movable piston (10), which can be pressed against a small diameter aperture (A1) of a valve seat (11) on the input side with the condensate valve (3) closed by means of the shut-off device (A) and that the piston (10) is configured as stepped piston which, seen in the direction of flow of the condensate has a piston surface (A2) and on the outlet side has a larger piston surface (A3), which is acted upon by the condensate via an overflow line (12) with the condensate valve (3) opened by means of the shut-off device (A).

2. Condensate drainage system in accordance with claim 1, **characterised in that** the overflow line is configured at least as a transit channel (12) passing axially through the piston (10), preferably centrally.

3. Condensate drainage system in accordance with one of the claims 1 or 2, **characterised in that** the condensate valve (3) is connected directly to the at least one oil-water separator (1).

4. Condensate drainage system in accordance with one of the claims 1 to 3, **characterised in that** the piston (10) is mounted movably in an upper portion of the housing (14), which has the valve seat (11) forming the small diameter aperture on the inflow side.

5. Condensate drainage system in accordance with claim 4, **characterised in that** a lower part of the housing (15) is attached coaxially to the upper part of the housing (14) forming a hermetically tight seal, in which the cross-section constriction, preferably the nozzle (13), is formed in a channel leading to the outlet of the condensate valve all.

6. Condensate drainage system in accordance with one of the preceding claims, **characterised in that** the shut-off device (A) is formed by a solenoid valve (4).

## Revendications

1. Système d'évacuation de condensats, le système comprenant au moins un séparateur d'huile/eau (1) relié à un compresseur (2) ou un étage de compression et communiquant avec l'un ou l'autre, une vanne à condensats (3) reliée, côté entrée, à l'au moins un séparateur d'huile/eau (1) et pouvant être ouverte ou fermée par l'intermédiaire d'un organe d'arrêt (A) connecté en série dans le sens d'évacuation des condensats et un récipient collecteur des condensats (6), qui communique avec la sortie de la vanne à condensats (3), **caractérisé en ce que** la vanne à condensats (3) est conçue, en même temps, comme réducteur de pression pour diminuer la pression des condensats s'écoulant et présente, côté sortie, un étranglement de section transversale, de préférence une buse (13), servant à commander et déterminer une petite quantité de condensats qui s'écoule directement dans le récipient collecteur des condensats (6), que la vanne à condensats (3) comprend un piston mobile (10) pouvant être pressé, côté entrée, contre une ouverture de petit diamètre (A1) d'un siège de soupape (11), lorsque la vanne à condensats (3) est fermée au moyen de l'organe d'arrêt (A), et que le piston (10) est conçu comme piston étagé qui possède une surface de piston (A2), côté entrée, vu dans le sens d'écoulement des condensats, et, côté sortie, une surface de piston plus grande (A3), qui est sollicitée par les condensats, lorsque la vanne à condensats (3) est ouverte par l'intermédiaire de l'organe d'arrêt (A).

2. Système d'évacuation de condensat suivant la revendication 1, **caractérisé en ce que** la conduite de dérivation est conçue au moins comme un canal de passage (12) s'étendant axialement, de préférence centralement, à travers le piston (10).

3. Système d'évacuation de condensat suivant une des revendications 1 ou 2, **caractérisé en ce que** la vanne à condensats (3) est reliée directement à au moins un séparateur d'huile/eau.

4. Système d'évacuation de condensat suivant une des revendications 1 à 3, **caractérisé en ce que** le piston (10) est reçu de façon mobile dans une partie de boîtier supérieure (14) qui présente, côté entrée de l'écoulement, le siège de soupape (11) formant une ouverture de petit diamètre.

5. Système d'évacuation de condensat suivant la revendication 4, **caractérisé en ce qu'une** partie de boîtier inférieure (15), dans laquelle l'étranglement de section transversale, de préférence la buse (13), est conçu dans un canal s'étendant vers la sortie de la vanne à condensats, est reliée coaxialement à la partie de boîtier supérieure (14) de façon à réaliser une fermeture hermétiquement étanche.

6. Système d'évacuation de condensat suivant une des revendications précédentes, **caractérisé en ce que** l'organe d'arrêt (A) est formé par une électrovanne (4).
